Europäisches Patentamt

European Patent Office

Office européen des brevets

(11) Numéro de publication: **0 404 668**
**A1**

## (12) DEMANDE DE BREVET EUROPEEN

(21) Numéro de dépôt: 90401731.6

(22) Date de dépôt: **19.06.90**

(51) Int. Cl.5: **A01F 15/07, A01D 90/08**

(30) Priorité: **19.06.89 FR 8908124**

(43) Date de publication de la demande:
**27.12.90 Bulletin 90/52**

(84) Etats contractants désignés:
**BE DE ES GB IT**

(71) Demandeur: **Bregeron, Jean-François**
**Le Buisson - Blond**
**F-87300 Bellac(FR)**

(72) Inventeur: **Bregeron, Jean-François**
**Le Buisson - Blond**
**F-87300 Bellac(FR)**

(74) Mandataire: **Moncheny, Michel et al**
**c/o Cabinet Lavoix 2 Place d'Estienne**
**d'Orves**
**F-75441 Paris Cedex 09(FR)**

(54) **Machine agricole pour le regroupement de balles.**

(57) Machine agricole montée sur roues pour le regroupement de balles, notamment de balles de foin rondes, tractée par une presse (10) à balles munie d'une sortie arrière (24) à capot (26) relevable, comprenant au moins deux plateaux (12, 14) reliés l'un à l'autre et munis chacun de moyens d'éjection (16, 18), le premier plateau (12) étant situé immédiatement sous la sortie de la presse et le second plateau (14) étant adjacent au premier de façon à recevoir la balle éjectée par les moyens d'éjection du premier plateau.

Fig 1

EP 0 404 668 A1

La présente invention a pour objet une machine agricole tractée pour le regroupement de balles notamment de balles de foin rondes.

Les exploitants agricoles sont amenés pour un grand nombre de cultures réaliser des balles notamment pour le foin ou la paille. Pour réaliser ces balles, l'exploitant utilise une machine agricole spéciale dite presse balles, qui est une machine tractée et qui a pour fonction de compresser et d'enchevêtrer les brins de paille ou de foin de façon réaliser un tapis qui est enroulé au fur et a mesure sur lui-même de façon a constituer un cylindre, le produit obtenu étant dénommé balle ronde.

Pour réaliser cette opération, la presse a balles montée sur roues comprend un dispositif bandes dont le mouvement permet l'enroulement mais également l'adaptation des bandes au diamètre de la balle au fur et a mesure de sa constitution. Une fois que le diamètre programmé est atteint. le mouvement des bandes permettant la constitution de la balle est arrêté et la partie arrière de la presse s'ouvre, généralement sous la pression de vérins hydrauliques propres a la presse. de façon a libérer la balle formée qui tombe par gravité sur le sol. L'exploitant peut alors réitérer l'opération en vue de réaliser une nouvelle balle. Les balles ainsi fabriquées sont réparties de façon aléatoire sur toute la surface du champ. Afin de pouvoir les stocker, l'exploitant regroupe tout d'abord les balles sur une remorque. Cette opération est réalisée a l'aide d'un tracteur muni de bras élévateurs dont les extrémités comprennent une fourche. L'exploitant a alors deux possibilités soit déplacer la remorque d'une balle à l'autre et charger celles-ci au fur et à mesure, soit laisser la remorque en un lieu fixe et déplacer les balles jusqu'à cette remorque.

Dans tous les cas, l'exploitant effectue un grand nombre de déplacements à travers le champ pour collecter l'ensemble des balles ce qui conduit à une perte de temps importante.

La machine agricole selon l'invention pallie ces inconvénients, en permettant le regroupement de balles par deux au moins, ceci avec un prix de revient faible et un coût de fonctionnement négligeable.

A cet effet, la machine agricole tractée et montée sur roues selon l'invention, pour le 'regroupement de balles, notamment de balles de foin rondes, associée à une presse à balles tractée avec sortie arrière et capot relevable est caractérisée en ce qu'elle comprend au moins deux plateaux reliés l'un à l'autre et munis chacun de moyens d'éjection, le premier plateau étant situé immédiatement sous la sortie de la presse et le second plateau étant adjacent au premier de façon à recevoir la balle éjectée par les moyens d'éjection du premier plateau et assurer son stockage temporaire.

Selon une caractéristique particulière de l'invention les premiers moyens d'éjection sont automatiques et comprennent un organe à dents multiples monté à rotation par rapport au premier plateau, autour d'un axe situé perpendiculairement à la direction d'avancement et à l'arrière de ce plateau, cet axe comprenant au moins un bras relié au capot relevable de la presse à balles.

Selon une autre caractéristique de l'invention, les seconds moyens d'éjection comprennent un organe à dents multiples monté à rotation par rapport au second plateau autour d'un axe situé perpendiculairement à la direction d'avancement et à l'arrière de ce plateau et des moyens pour faire pivoter l'organe à dents multiples autour de l'axe.

Le second plateau de la machine agricole selon l'invention comprend lui-même des troisièmes moyens d'éjection, à organe à dents multiples montés à rotation par rapport à l'organe à dents multiples des seconds moyens d'éjection.

L'invention est maintenant décrite selon un mode de réalisation particulier en regard des dessins annexés, sur lesquels :

- la figure 1, représente une vue en élévation latérale de la machine agricole selon l'invention, reliée à la presse à balles,

- la figure 2, est une vue en coupe selon la ligne 2-2 de la figure 1,

- la figure 3, est une vue en élévation de l'arrière de la machine selon l'invention avec mouvement du premier plateau,

- la figure 4, est une vue en coupe selon la ligne 4-4 de la figure 3,

- la figure 5 est une vue arrière de la machine avec les seconds moyens d'éjection en position de travail, la balle étant supprimée, et

- la figure 6 est une vue en coupe selon la ligne 6-6 de la figure 5, la balle étant figurée.

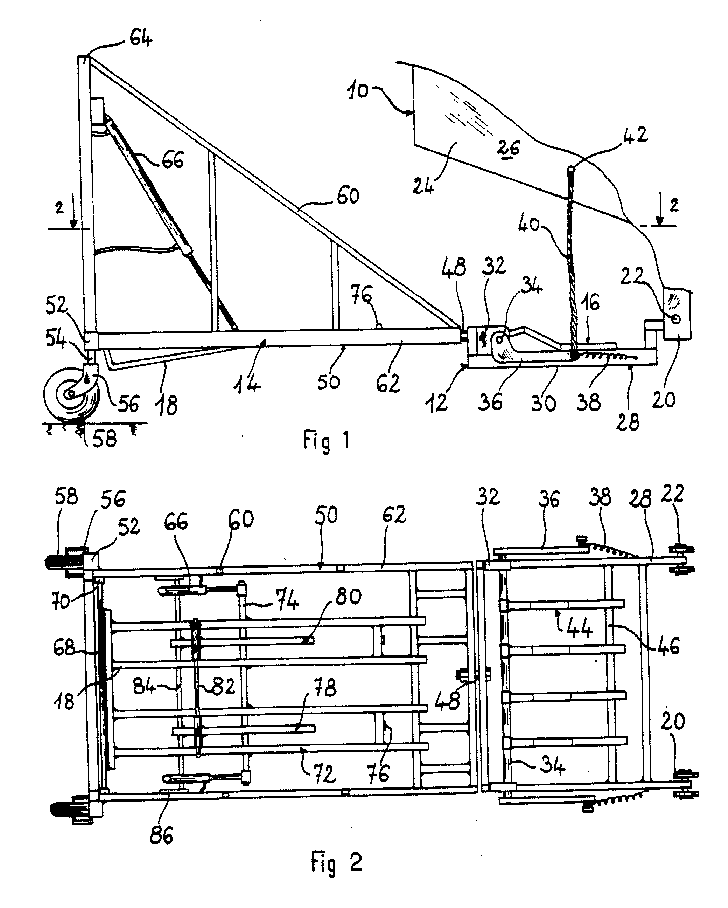

Sur la figure 1 on a représenté la machine agricole selon l'invention tractée par une presse à balles rondes.

La machine agricole selon l'invention comprend un premier plateau 12, un second plateau 14, des premiers moyens d'éjection 16 et des seconds moyens d'éjection 18.

La presse 10, à balles rondes, étant elle-même munie d'un essieu et de roues, est tirée par un tracteur.

Des pattes 20 fixées sur l'essieu de la presse 10 permettent l'accrochage du premier plateau 12 au moyen de clavettes 22.

De façon connue, la presse 10 comprend également une sortie arrière 24 pour l'évacuation des balles, ainsi qu'un capot relevable 26 permettant l'évacuation des balles.

Le premier plateau 12 comprend un châssis 28 constitué de montants tubulaires à section rectangulaire soudés entre eux. La forme générale de ce premier plateau est rectangulaire et deux de ses côtés opposés sont parallèles à la direction d'avancement de l'ensemble. Deux paliers latéraux 32 sont fixés sur ces côtés et un arbre 34 est monté tournant dans ces paliers 32. Cet arbre 34 est débouchant à l'extérieur de part et d'autre du plateau 12 et sur ses extrémités sont fixés des bras de manoeuvre 36 dont l'extrémité libre est reliée d'une part à l'extrémité d'un ressort 38 dont la seconde extrémité est fixée au bâti 28 et d'autre part à l'extrémité d'un câble 40 dont l'autre extrémité 42 est fixée au capot relevable 26.

Les premiers moyens d'éjection comprennent un organe à dents multiples 44, monté fixe en rotation sur l'arbre 34.

En position de repos, les bras de manoeuvre 36 et l'organe à dents multiples 44 sont sensiblement dans un même plan, cet organe venant en appui par l'extrémité de ses dents sur une traverse 46.

Le second plateau 14 est relié au premier plateau par un axe 48 orienté parallèlement à la direction d'avancement et sensiblement en position médiane. Le second plateau 14 comprend un bâti 50, de forme sensiblement rectangulaire et réalisé au moyen de tubes soudés à section rectangulaire. A l'arrière de ce bâti, il est prévu deux supports 52 dans lesquels sont montés à rotation les extrémités 54 de fourches 56 supportant des roues 58 venant en appui sur le sol.

Des barrières latérales 60 de guidage des balles sont fixées sur les côtés 62 du bâti 50, parallèlement à la direction d'avancement.

Dans les angles arrières du plateau 14, des montants verticaux 64 sont fixés au bâti 50. Ils complètent les barrières latérales 60 de guidage. Des vérins latéraux 66 de type à double-effet, sont fixés, par l'une de leurs extrémités, à la partie supérieure de ces montants verticaux 64, et par l'autre aux seconds moyens d'éjection 18.

Ces seconds moyens d'éjection 18 comprennent un arbre 68 monté à rotation dans des paliers latéraux solidaires des côtés 62 du bâti 50. L'organe à dents multiples 72 est fixé sur cet arbre 68. Une barre transversale 74 solidaire de cet organe à dents multiples permet l'accrochage de l'extrémité des vérins double effet 66.

Sur la figure 2, on remarque également que l'organe à dents multiples 72 est muni d'ergots 76 orientés perpendiculairement au plan de l'organe à dents multiples.

Des troisièmes moyens d'éjection 78 sont solidaires de l'organe à dents multiples 72. Ces troisièmes moyens d'éjection comprennent un organe à dents multiples 80, monté pivotant autour d'un arbre 82 solidaire de l'organe à dents multiples 72 des seconds moyens d'éjection. Les dents de ce second organe à dents multiples 80 ont leurs extrémités arrières solidaires d'une barre de liaison 84. Les extrémités de la barre de liaison 84 viennent en appui sur des butées latérales 86 solidaires du bâti 50.

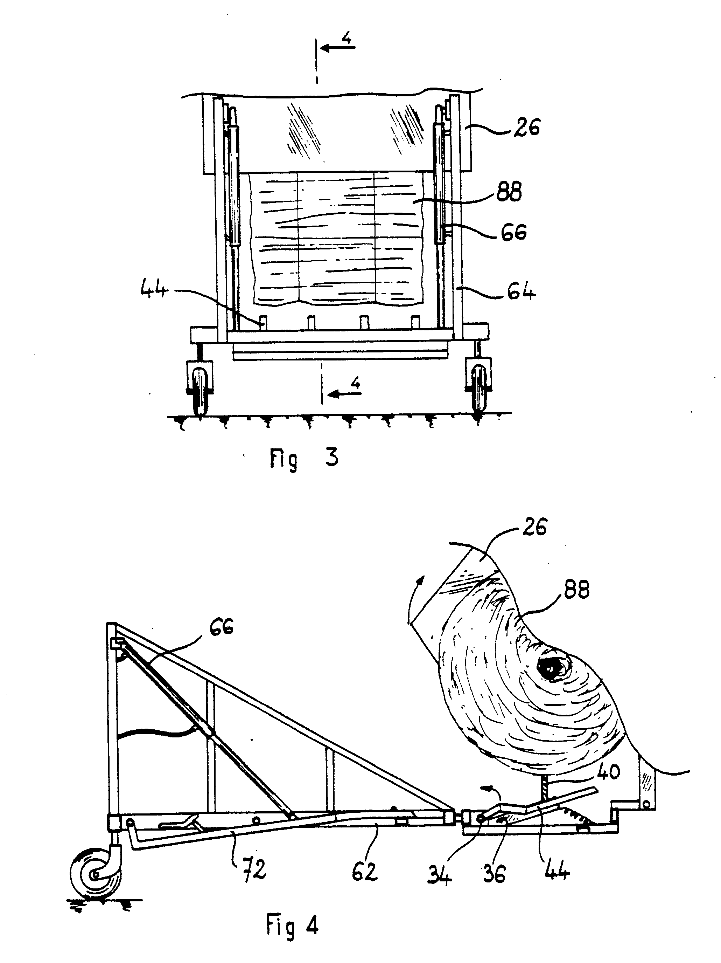

Sur la figure 3 et sur la coupe représentée à la figure 4, on a représenté la machine selon l'invention en cours de fonctionnement. Lors de cette première étape, la balle 88 est lâchée par la presse à balles et pour permettre sa sortie, le capot 26 est en position relevée. Le câble 40 a subi un déplacement vers le haut ce qui entraîne en rotation le bras 36 ainsi que l'organe à dents multiples 44 solidaire de l'arbre 34, lui même mis en rotation par le bras 36. Le vérin 66 est en position de repos et l'organe à dents multiples 72 est en appui sur le bâti 50.

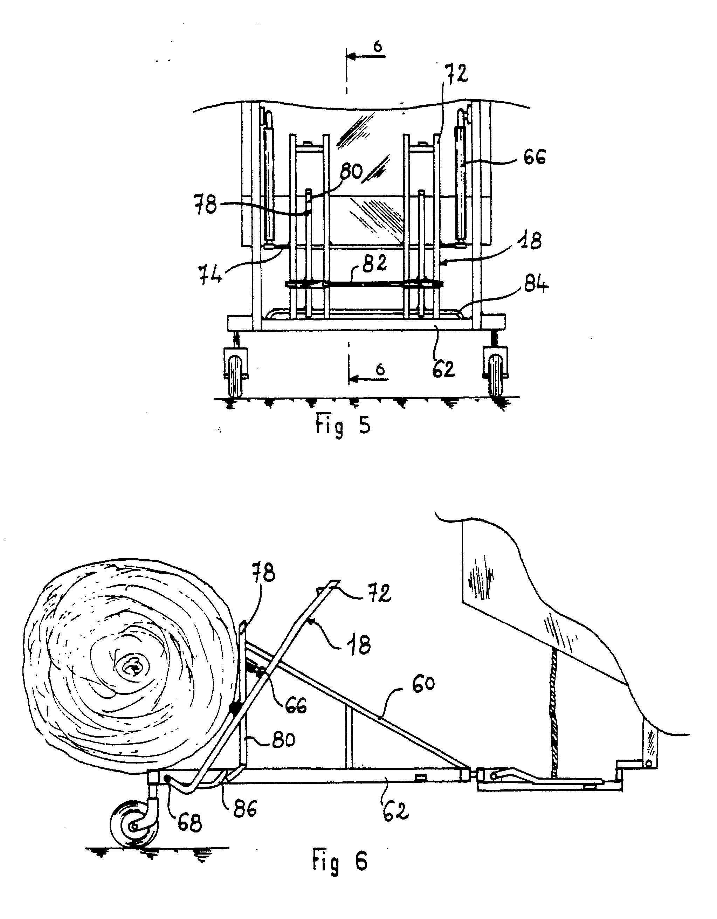

Sur les figures 5 et 6 on a représenté la machine selon l'invention lors d'une éjection de balles par les seconds et troisièmes moyens d'éjection 18 et 78.

Sur la figure 6 la balle a été omise pour permettre de faire figurer ces seconds et troisièmes moyens d'éjection en position de travail.

Sur la figure 5, le piston des vérins 66 est en position rentrée et la barre transversale 74 provoque le pivotement de l'organe à dents multiples 72 autour de l'arbre 68. Parallèlement, la barre de liaison 84 maintenue par les butées 86 provoque le pivotement de l'organe à dents multiples 80 des troisièmes moyens d'éjection 78 par rapport à l'organe à dents multiples 72 des seconds moyens d'éjection.

Comme cela est représenté à la figure 6, la distance qui sépare l'organe à dents multiples 80 des troisièmes moyens d'éjection 78 à l'arrière du bâti est inférieure au rayon de la balle.

Les vérins 66 sont commandés par des moyens manuels à la portée immédiate de l'exploitant.

Le fonctionnement de la machine agricole qui vient d'être décrite est le suivant.

La presse à balles rondes est tractée et au fur et à mesure de son avancement dans le champ, elle confectionne une balle. Lorsque celle-ci atteint le diamètre programmé l'exploitant arrête la presse à balles et déclenche la manoeuvre de largage de la balle par la sortie arrière 24. Pour permettre le passage de cette balle, le capot 26 est relevé de façon connue, au moyen de vérins hydrauliques par exemple. Ce mouvement du capot entraîne simultanément le câble 40 qui à son tour fait pivoter les bras de manoeuvre 36 qui entraînent alors l'arbre 34 qui fait pivoter l'organe à dents multiples 44. L'inclinaison de cet organe est telle que la balle en tombant est contrainte de rouler sur cet organe à dents multiples incliné et du fait de son inertie elle roule sur l'organe à dents multiples 72 des seconds moyens d'éjection. La forme en creux de l'organe à dents multiples 72 permet un stockage temporaire de la balle à l'arrière du second plateau. Latéralement, la balle est maintenue par les barrières latérales 60. La presse à balles est à nouveau tractée de façon à confectionner une deuxième balle. Lorsque le diamètre programmé est atteint pour cette deuxième balle, l'exploitant arrête l'avance de la presse à balles et il actionne manuellement les moyens de commande des vérins 66 de façon à exercer une traction sur la barre transversale 74 ce qui provoque le pivotement de l'organe à dents multiples 72 autour de l'axe 68 et simultanément le mouvement de l'organe à dents multiples 80 des troisièmes moyens d'éjection 78 par rapport aux seconds moyens d'éjection. Compte tenu de l'accélération donnée à la balle et du fait que la distance entre l'organe à dents multiples 80 et l'arrière du bâti 50 est inférieure au rayon de la balle, la balle est éjectée hors de la machine. Sans déplacer l'ensemble presse à balles et machine agricole de regroupement, l'exploitant effectue l'opération d'évacuation de la balle hors de la presse à balles. Cette deuxième balle est alors éjectée par les premiers moyens d'éjection vers les seconds moyens d'éjection où elle est stockée temporairement. Durant la manoeuvre de remise en place du capot de la presse à balles et de retour en position de repos des premiers moyens d'éjection, l'exploitant actionne à nouveau les seconds moyens d'éjection en commandant les vérins hydrauliques 66 de façon à éjecter cette deuxième balle qui roule jusqu'à venir au contact de la première balle. Compte tenu que les deux balles ont sensiblement le même poids et subissent sensiblement la même accélération, le regroupement des deux balles est parfait. L'exploitant peut alors réaliser deux nouvelles balles qui seront regroupées de la même façon.

On constate que le nombre de déplacements de l'exploitant est réduit dans des proportions très importantes car les fourches des bras élévateurs utilisées pour la saisie d'une balle peuvent l'être aisément pour la saisie des deux balles du fait que celles-ci sont parfaitement regroupées et pressées l'une contre l'autre.

Le prix de revient de la machine agricole de regroupement est faible compte tenu du fait que les seules pièces de précision sont les vérins et que le reste est de la structure mécano-soudée. La pression hydraulique est identique à celle qui est utilisée dans la presse et il suffit de réaliser des dérivations. Quant à la commande des premiers moyens d'éjection, elle se fait grâce aux vérins hydrauliques de la presse à balles elle-même et ne requiert donc aucun investissement.

Le coût de fonctionnement est négligeable puisqu'il n'y a aucune motorisation particulière. Quant au temps requis pour le regroupement de deux balles il est très légèrement supérieur à deux fois le temps d'évacuation d'une balle de la presse à balles. L'éjection d'une balle portée par la machine agricole de regroupement et l'évacuation d'une balle de la presse à balles se font de façon quasi simultanée.

Selon une variante de l'invention un des moyens d'éjection ou les deux peuvent être remplacés par des transporteurs à bandes. Il suffit alors de disposer pour l'entraînement de ces bandes d'un moteur hydraulique de faible puissance. De tels transporteurs à bandes en substitution des moyens d'éjection à organe à dents multiples peuvent présenter des avantages dans le cas de certaines presses à balles de petites dimensions dans lesquelles la hauteur disponible sous le capot de la presse à balles est faible.

Selon une autre variante, les deux vérins latéraux peuvent être remplacés de façon avantageuse par un vérin unique disposé sous l'organe à dents multiples 72 des deuxièmes moyens d'éjection.

**Revendications**

1. Machine agricole montée sur roues pour le regroupement de balles, notamment de balles de foin rondes, tractée par une presse (10) à balles munie d'une sortie arrière (24) à capot (26) relevable,
caractérisée en ce qu'elle comprend au moins deux plateaux (12, 14) reliés l'un à l'autre et munis chacun de moyens d'éjection (16, 18), le premier plateau (12) étant situé immédiatement sous la sortie de la presse et le second plateau (14) étant adjacent au premier de façon à recevoir la balle éjectée par les moyens d'éjection du premier plateau.

2. Machine selon la revendication 1, caractérisée en ce que les premiers moyens d'éjection sont automatiques et comprennent un organe à dents multiples (44) monté à rotation par rapport au premier plateau (12) autour d'un axe (34) situé perpendiculairement à la direction d'avancement et à l'arrière de ce plateau, cet axe comprenant au moins un bras (36) relié au capot (26)relevable de la presse à balles.

3. Machine selon la revendication 2, caractérisée en ce que des ressorts (38) de rappel sont interposés entre les bras (36) et le premier plateau (12).

4. Machine selon l'une quelconque des revendications précédentes, caractérisée en ce que les seconds moyens d'éjection comprennent un organe à dents multiples (72), monté à rotation par rapport au second plateau autour d'un axe (68) situé perpendiculairement à la direction d'avancement et à l'arrière de ce plateau, et des moyens pour faire pivoter cet organe à dents multiples autour de cet axe.

5. Machine selon la revendication 4, caractérisée en ce que les moyens pour faire pivoter l'organe à dents multiples (72) autour de l'axe (68) sont à commande manuelle.

6. Machine selon l'une des revendications 4 ou 5, caractérisée en ce que les moyens pour faire pivoter l'organe à dents multiples (72) comprennent au moins un vérin (66) hydraulique à double-effet dont les extrémités sont reliées par des articulations d'une part au second plateau (14) et d'autre part à l'organe à dents multiples (72).

7. Machines selon l'une quelconque des revendications précédentes, caractérisée en ce que le second plateau (14) comprend des troisièmes moyens d'éjection (78).

8. Machine selon la revendication 7 caractérisée en ce que les troisièmes moyens d'éjection (78) comprennent un organe à dents multiples (80) monté à rotation par rapport à l'organe à dents multiples (72) des seconds moyens d'éjection.

9. Machine selon l'une quelconque des revendications précédentes, caractérisée en ce que l'organe à dents multiples des seconds moyens d'éjection (18) a une forme en creux destinée à recevoir une balle (88).

10. Machine selon l'une quelconque des revendications précédentes, caractérisée en ce que les premier et second plateaux (12, 14) sont reliés l'un à l'autre par un axe (48) unique orienté parallèlement à la direction d'avancement.

Fig 1

Fig 2

Fig 3

Fig 4

Fig 5

Fig 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-110056 (BÜSATIS)<br>* page 8, alinéa 8 - page 12; figures 1, 2, 3 * | 1, 2, 3, 4, 5, 6 | A01F15/07<br>A01D90/08 |

DOMAINES TECHNIQUES
RECHERCHES (Int. Cl.5 )

A01F
A01D
A01D

Le présent rapport a été établi pour toutes les revendications

| Lieu de la recherche | Date d'achèvement de la recherche | Examinateur |
|---|---|---|
| LA HAYE | 21 SEPTEMBRE 1990 | VERMANDER R.H. |

EPO FORM 1503 03.82 (P0402)